# EUROPEAN PATENT APPLICATION

(11) **EP 4 723 189 A1**
(43) Date of publication of application: **08.04.2026**
(21) Application number: 24901993.6
(22) Date of filing: 29.04.2024
(51) Int. Cl.: H01M 4/13, H01M 4/139, H01M 10/0525

(54) **POSITIVE ELECTRODE SHEET AND PREPARATION METHOD THEREFOR, AND LITHIUM-ION BATTERY**

(30) Priority: 15.12.2023 CN 202311735942
(71) Applicant: Beijing Easpring Material Technology Co., Ltd., Beijing 100160 (CN)
(72) Inventor: ZHANG, Weining, Beijing 100160 (CN); HE, Can, Beijing 100160 (CN); SONG, Shunlin, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/090680
(87) International publication number: WO 2025/123563

(57) **Abstract**

The present invention relates to the technical field of lithium-ion batteries, and particularly provides a positive electrode sheet and a preparation method therefor, and a lithium-ion battery comprising the positive electrode sheet. The positive electrode sheet comprises a positive electrode active material layer, and the positive electrode active material layer comprises a positive electrode material, a negative thermal expansion material, a conductive agent, and a binder, wherein the characteristic value J of the positive electrode sheet satisfies: 0.001≤J≤0.005. wherein J=R(F)/p, R(F) represents the peak intensity ratio between the main peak (F) of the negative thermal expansion material and the (003) characteristic peak of the positive electrode material in the XRD pattern of the positive electrode sheet, and p represents the surface density of the positive electrode sheet, with a unit of mg/cm². The provided positive electrode sheet has low volume expansion, high structural stability, and high temperature stability at the same time. In addition, the lithium-ion battery comprising the positive electrode sheet has excellent capacity performance, rate capability, cycle performance, and energy density.

## Description

### CROSS REFERENCE TO RELATED APPLICATIONS

This application claims priority to and benefits of Chinese Patent Application No. 202311735942.X, filed with China National Intellectual Property Administration on December 15, 2023, the entire contents of which are incorporated herein by reference.

### FIELD

The present disclosure relates to the technical field of lithium-ion batteries, and particularly, to a cathode sheet and a method for preparing same, and a lithium-ion battery including the cathode sheet.

### BACKGROUND

A lithium-ion battery is a novel green secondary battery successfully developed in the 1990s. In recent years, with the pursuit of green energy, the lithium-ion battery has flourished significantly, and application fields of the lithium-ion battery have continuously expanded from initially small digital products to power tools, electric vehicles, energy storage power stations, and the like. Achieving high energy density, high voltage, long cycle life, and high safety for the lithium-ion battery has become a key goal in this field.

A cathode sheet has a significant impact on performance of the lithium-ion battery, and includes a cathode current collector and a cathode active material layer disposed on a surface of the cathode current collector. The cathode active material layer is a thin film formed by coating a cathode active material on the surface of the cathode current collector, and consists of a lithium-containing layered compound as a cathode material, a conductive agent, and a binder. The cathode material constitutes a major portion. The cathode active material layer needs to possess high electrical conductivity and high durability. For the cathode material, intercalation and deintercalation of lithium ions during charging and discharging cause changes in a unit cell volume, affecting contact between cathode particles. Further, heat is generated during charge-discharge cycles of the lithium-ion battery. Thermal expansion and contraction of the cathode current collector and the cathode active material layer produce stresses and deformations, leading to swelling. The swelling results in a sheet deformation, fracture of cathode particles, and disruption of contact between a cathode and the cathode current collector, causing continuous degradation of discharge performance of the battery, accelerating decay of cycle life of the battery, and posing safety hazards.

CN109728275A utilizes a negative thermal expansion property of scandium fluoride (ScF₃ phase) to improve high-temperature stability of a material. However, after a surface modification of the cathode material via scandium fluoride coating, this coating layer affects and reduces lithium-ion transport performance on the surface of the cathode material, impacting capacity utilization of a sheet fabricated from the corresponding cathode material, significantly decreasing a capacity of a lithium battery, and consequently adversely affecting a rate capability and an energy density. Therefore, it is necessary to optimize sheet performance by leveraging favorable characteristics of a negative thermal expansion material to enhance electrical performance.

Thus, it is of great significance to develop a cathode sheet possessing satisfactory high-temperature stability and satisfactory electrochemical performance in capacity, rate capability, and cycling performance.

### SUMMARY

An objective of the present disclosure is to overcome the above technical problems. The present disclosure provides a cathode sheet and a method for preparing same, and a lithium-ion battery. The cathode sheet possesses low volume expansion, high structural stability, and high-temperature stability. In addition, the lithium-ion battery including the cathode sheet exhibits satisfactory capacity performance, rate capability, cycling performance, and energy density.

To achieve the above objective, in a first aspect of the present disclosure, a cathode sheet is provided. The cathode sheet includes a cathode active material layer. The cathode active material layer includes a cathode material, a negative thermal expansion material, a conductive agent, and a binder. The cathode sheet has a characteristic value J satisfying: 0.001≤J≤0.005. J=R(F)/p, where R(F) represents a ratio of a peak intensity of a main peak (F) of the negative thermal expansion material to a peak intensity of a (003) characteristic peak of the cathode material in an X-Ray Diffraction (XRD) pattern of the cathode sheet; and ρ represents an areal density of the cathode sheet, in the unit of mg/cm².

It was found by the inventor that: by adding the negative thermal expansion material to the cathode active material layer, the negative thermal expansion material can absorb heat generated during cycling of the cathode material in situ and undergo a volume reduction, providing a space for a volume expansion of the cathode active material, and helping to alleviate a stress and avoid a material deformation. In addition, by incorporating the negative thermal expansion material and the cathode material into the cathode active material layer, the negative thermal expansion material maintains its original material structure and is uniformly distributed in the cathode active material layer, forming inter-particle contact with the cathode material. In this way, at a level of the cathode sheet, the negative thermal expansion material can be ensured to optimally counteract a volume expansion of the cathode active material layer caused by a thermal expansion of the cathode material during charge-discharge cycles. Since a lattice parameter of the cathode material (especially a lithium nickel cobalt manganese oxide cathode material) varies within a predetermined range due to different doping modifications, differences also exist in heat generation during charging and discharging when the cathode material is applied in sheets.

Further, when cathode sheets are processed using a same formulation for a same cathode material, differences in areal densities of coating lead to variations in internal resistances of the sheets, resulting in different heat generation situations of the sheets during the charge-discharge cycles.

Therefore, in the present disclosure, by reasonably controlling the characteristic value J of the cathode sheet, i.e., by properly controlling a composition of the cathode active material layer in the cathode sheet, the cathode sheet made of the cathode material incorporating the negative thermal expansion material is realized, effectively mitigating the deformation of the cathode sheet caused by the thermal expansion during the charge-discharge cycles without affecting lithium-ion transport performance and electrical conductivity.

In a second aspect of the present disclosure, a method for preparing a cathode sheet is provided. The method includes: (1) mixing a cathode material, a negative thermal expansion material, a conductive agent, a binder, and a solvent to obtain a cathode slurry; and (2) coating the cathode slurry on a surface of a cathode current collector, and performing drying and roller pressing sequentially, to load a cathode active material layer on the surface of the cathode current collector for obtaining the cathode sheet. The cathode material is a lithium-containing layered compound. The negative thermal expansion material has a composition represented by Formula II: QₐQ'_{b}O_{c} (II), where a, b, and c are each independently selected from a natural number from 1 to 15, Q and Q' are each independently selected from at least one element of Zr, W, Hf, Al, Sc, In, Y, Mo, V, Sn, Ti, or P, and Q and Q' are different elements.

In a third aspect of the present disclosure, a lithium-ion battery is provided. The lithium-ion battery includes the cathode sheet in the first aspect, or the cathode sheet prepared by the method in the second aspect.

Compared with the related art, the present disclosure has the following advantages.
(1) The cathode sheet provided by the present disclosure incorporates the negative thermal expansion material and is configured with the specific characteristic value J, which achieves satisfactory rate capability and capacity utilization while ensuring unrestricted lithium-ion transport from a bulk to a surface of the cathode material in the cathode active material layer. In addition, due to a combination of the negative thermal expansion material and the cathode material, the expansion of the cathode sheet during cycling is suppressed, which avoids an impact of the expansion of the cathode sheet on electrical performance, enhancing structural stability, thermal stability, and cycle life of the cathode sheet, and improving safety of the battery.
(2) In the cathode sheet provided by the present disclosure, the negative thermal expansion material with a specific content is added, which not only has almost no effect on a discharge capacity, but also contributes to high rate capability to some extent, for a reason that a volume thermal expansion effect of the cathode material under high-rate and high-current conditions can be partially offset by a volume contraction of the negative thermal expansion material.
(3) The method provided by the present disclosure offers advantages such as simple process, green and pollution-free preparation process, and low production costs, facilitating large-scale industrial production.
(4) Applying the cathode sheet provided by the present disclosure in the lithium-ion battery can effectively improve electrochemical performance of the lithium-ion battery, especially in terms of capacity performance, rate capability, and cycling performance.

### BRIEF DESCRIPTION OF THE DRAWINGS

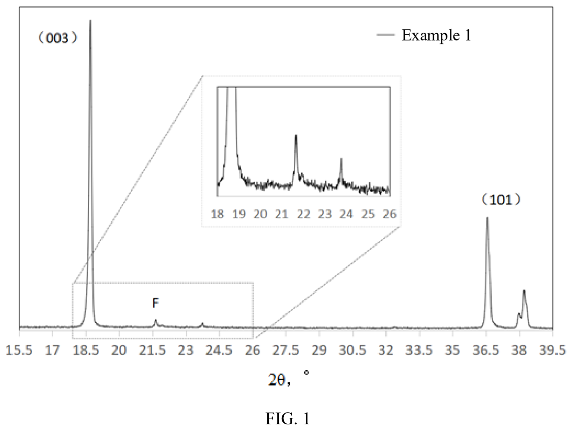

FIG. 1 is an XRD pattern of cathode sheet S1 prepared in Example 1.

### DETAILED DESCRIPTION

The endpoint values or any values of the ranges disclosed in the present disclosure are not limited to the precise ranges or values. These ranges or values should be understood to include values close to these ranges or values. For numerical ranges, one or more new numerical ranges can be obtained by combining the endpoint values of the respective ranges, an endpoint value and an individual point value within the respective ranges, and individual point values within the respective ranges, and these numerical ranges should be regarded as specifically disclosed in the present disclosure.

In a first aspect of the present disclosure, a cathode sheet is provided. The cathode sheet includes a cathode active material layer. The cathode active material layer includes a cathode material, a negative thermal expansion material, a conductive agent, and a binder. The cathode sheet has a characteristic value J satisfying: 0.001≤J≤0.005. J=R(F)/p, where R(F) represents a ratio of a peak intensity of a main peak (F) of the negative thermal expansion material to a peak intensity of a (003) characteristic peak of the cathode material in an X-Ray Diffraction (XRD) pattern of the cathode sheet, and ρ represents an areal density of the cathode sheet, in the unit of mg/cm².

In the present disclosure, J=R(F)/p ranges from 0.001 to 0.005, which defines a relative numerical ratio relationship between R(F) and ρ when the unit of the areal density ρ of the cathode sheet is mg/cm². That is, when either R(F) or p of the cathode sheet is specified, the other parameter must fall within an appropriate range to obtain the cathode sheet of the present disclosure.

In the present disclosure, unless otherwise specified, the cathode sheet further includes a cathode current collector. The cathode active material layer is disposed on a surface of the cathode current collector. In the present disclosure, the cathode current collector includes, but is not limited to, an aluminum foil and the like.

In some embodiments of the present disclosure, the characteristic value J of the cathode sheet satisfies: 0.001≤J≤0.005, e.g., 0.001, 0.00125, 0.0015, 0.0018, 0.002, 0.0023, 0.0025, 0.003, 0.0035, 0.004, 0.005, and any value within a range formed by any two of these values. Preferably, 0.00125≤J≤0.004.

In the present disclosure, by reasonably controlling the characteristic value J of the cathode sheet, lithium-ion transport from a bulk to a surface of the cathode material in the cathode active material layer is ensured to be unrestricted, achieving satisfactory rate capability and capacity utilization. In addition, due to a combination of the negative thermal expansion material and the cathode material, an expansion of the cathode sheet during cycling is suppressed, which avoids an impact of the expansion of the cathode sheet on electrical performance, enhancing high-temperature stability and cycle life of the cathode sheet, and improving safety of the battery.

In some embodiments of the present disclosure, preferably, R(F)=I(F)/I(003), where I(F) represents the peak intensity of the main peak (F) of the negative thermal expansion material in the XRD pattern of the cathode sheet; and I(003) represents the peak intensity of the (003) characteristic peak of the cathode material in the XRD pattern of the cathode.

In the present disclosure, unless otherwise specified, I(003) represents the peak intensity of the (003) characteristic peak of the cathode material near 2θ=18°±2°, and I(F) represents the peak intensity of the main peak (F) of the negative thermal expansion material.

In the present disclosure, by adjusting the ratio R(F) of the peak intensity I(F) of the negative thermal expansion material to the peak intensity I(003) of the cathode material in the cathode sheet, high-temperature performance and cycling stability of the sheet can be improved. An R(F) value being too low indicates that the negative thermal expansion material in the processed cathode sheet fails to maintain its original crystal structure, and thus a property of contracting upon heating and expanding upon cooling of the negative thermal expansion material cannot be effectively utilized. However, the R(F) value being too high indicates that an excessive amount of negative thermal expansion material is added, which affects capacity utilization of the cathode sheet.

In some embodiments of the present disclosure, preferably, 0.005≤R(F)≤0.1, e.g., 0.005, 0.01, 0.015, 0.02, 0.025, 0.03, 0.035, 0.04, 0.045, 0.05, 0.08, 0.1, and any value within a range formed by any two of these values. More preferably, 0.02≤R(F)≤0.05.

In the present disclosure, the R(F) value falling within the above range, particularly the preferred range, on the one hand, indicates that the applied negative thermal expansion material possesses satisfactory crystallinity and can maintain its structure within the sheet, thereby exhibiting the characteristic peak (F) in an XRD diffraction pattern. On the other hand, the R(F) value falling within the above range, particularly the preferred range, shows that a proportion of the negative thermal expansion material capable of exerting a negative thermal expansion effect in the cathode active material layer can match a sheet process, thereby achieving optimal performance.

In the present disclosure, the parameter areal density of the cathode sheet affects performance of the cathode sheet. When the areal density of the cathode sheet is relatively lower, the cathode sheet is relatively thinner, and the battery has a relatively smaller internal resistance. Further, during charge-discharge cycles, a change of a structure of the sheet caused by continuous intercalation and deintercalation of lithium ions in the lithium-ion battery is relatively smaller, which is beneficial for lithium-ion migration. Furthermore, the sheet has a relatively smaller thermal expansion. Conversely, when the areal density of the cathode sheet is relatively higher, the lithium ions have a relatively longer migration path, the battery has a relatively greater internal resistance, and the sheet has a relatively greater thermal expansion.

In the present disclosure, if the areal density ρ of the cathode sheet is too low, very little active material is available in the battery for fast charging, and a gram capacity of the cathode sheet is relatively low. In addition, during processing of the cathode sheet, cathode active particles are prone to fracture, affecting a service life of the battery. If the areal density ρ of the cathode sheet is too high, not only stability of the cathode active material layer and a surface quality of the cathode sheet are affected, but also charge transfer impedance and polarization are increased, leading to increased internal resistance of the battery, reduced discharge specific capacity, inferior rate capability, and shortened cycle life. Therefore, reasonably controlling the areal density of the cathode sheet is of great significance for battery performance.

In some embodiments of the present disclosure, preferably, the areal density of the cathode sheet satisfies: 8 mg/cm²≤ρ≤25 mg/cm², e.g., 8 mg/cm², 10 mg/cm², 12 mg/cm², 14 mg/cm², 16 mg/cm², 20 mg/cm², 25 mg/cm², and any value within a range formed by any two of these values. Preferably, 10 mg/cm²≤ρ≤16 mg/cm².

In the present disclosure, unless otherwise specified, the areal density ρ of the cathode sheet refers to a coating weight of the cathode active material layer per unit area of the battery sheet. The parameter areal density ρ of the cathode sheet is measured by the following method: areal density ρ=coating weight m of the cathode active material layer/coating area S. The coating weight m of the cathode active material layer may be obtained by subtracting a weight of the cathode current collector (aluminum foil) from a weight of the coated cathode sheet. The coating area S is an area of the cathode current collector corresponding to the cathode sheet, i.e., an area of the circular aluminum foil, which can be calculated from a diameter of the aluminum foil.

In the present disclosure, due to a strong orientation of a crystal structure of the cathode material, distinct and separate diffraction peaks appear within a predetermined angular range in the XRD pattern. For example, the (003) characteristic peak of the cathode material corresponds to 2θ=18°±2°, and a (101) characteristic peak of the cathode material corresponds to 2θ=37°±2°, with no other peaks of the cathode material appearing between the (003) characteristic peak and the (101) characteristic peak.

In some embodiments of the present disclosure, preferably, in the XRD pattern of the cathode sheet, the cathode material has the (003) characteristic peak at 2θ=18°±2° and the (101) characteristic peak at 2θ=37°±2°.

In the present disclosure, for the cathode active material layer modified with the negative thermal expansion material, the negative thermal expansion material existing in its original crystal structure can display corresponding lines in the XRD diffraction pattern of the cathode sheet. These lines appear between the (003) characteristic peak and the (101) characteristic peak of the cathode material. One or more characteristic peaks of the negative thermal expansion material may appear in this interval, in which a peak with a highest peak intensity is defined as the main peak (F). An XRD peak intensity of the main peak (F) is defined as I(F).

In some embodiments of the present disclosure, preferably, in the XRD pattern of the cathode sheet, the main peak (F) of the negative thermal expansion material is located between the (003) characteristic peak and the (101) characteristic peak of the cathode material. Meeting the above feature indicates that the negative thermal expansion material incorporated in the cathode sheet can maintain its original structure and exhibits satisfactory negative thermal expansion performance.

In a specific embodiment of the present disclosure, in the XRD pattern of the cathode sheet, diffraction peaks of the negative thermal expansion material, especially the main peak (F), are distributed between the (003) characteristic peak and the (101) characteristic peak of the cathode material, i.e., between 2θ=18° and 2θ=37°.

In some embodiments of the present disclosure, preferably, the negative thermal expansion material has an average particle size D₅₀(F) satisfying: D₅₀(F)≤0.42D₅₀, where D₅₀ represents an average particle size of the cathode material, in the unit of µm. In the present disclosure, selecting the negative thermal expansion material with an appropriate D₅₀(F) helps fill voids in the cathode material of the cathode sheet, allowing the negative thermal expansion material to function more effectively.

In some embodiments of the present disclosure, preferably, the average particle size D₅₀ of the cathode material ranges from 1 µm to 20 µm, e.g., 1 µm, 2 µm, 5 µm, 8 µm, 10 µm, 15 µm, 20 µm, and any value within a range formed by any two of these values, and preferably, from 1 µm to 10 µm.

In some embodiments of the present disclosure, preferably, the average particle size D₅₀(F) of the negative thermal expansion material ranges from 0.1 µm to 10 µm, e.g., 0.1 µm, 0.5 µm, 1 µm, 2 µm, 3 µm, 5 µm, 10 µm, and any value within a range formed by any two of these values, and preferably, from 0.1µm to 3 µm.

In some embodiments of the present disclosure, preferably, the cathode material is a lithium-containing layered compound.

In the present disclosure, a wide selection range is available for the type of the cathode material. Preferably, the cathode material has a composition represented by Formula I: Li_{1+α}NiₓCo_{y}Mn_{z}MₘM'ₙO₂ (I), where -0.5≤α≤0.4, 0<x<1, 0≤y<1, 0≤z<1, 0≤m≤0.1, 0≤n≤0.1, x+y+z+m+n=1, and M and M' are each independently selected from at least one element of Al, Y, Ti, Zr, V, Nb, Ta, Cr, Mo, W, La, Ce, Er, Mg, Sr, Ba, P, or B.

In some specific embodiments of the present disclosure, in the Formula I, - 0.5≤α≤0.4, e.g., -0.5, -0.2, -0.1, 0, 0.02, 0.03, 0.05, 0.1, 0.2, 0.4, and any value within a range formed by any two of these values, and preferably, 0≤α≤0.1.

In some specific embodiments of the present disclosure, in the Formula I, 0<x<1, e.g., 0.2, 0.5, 0.6, 0.7, 0.8, 0.83, 0.9, 0.95, and any value within a range formed by any two of these values, and preferably, 0.6≤x≤0.9.

In some specific embodiments of the present disclosure, in the Formula I, 0≤y<1, e.g., 0, 0.01, 0.05, 0.1, 0.11, 0.15, 0.2, 0.3, 0.4, and any value within a range formed by any two of these values, and preferably, 0.01≤y≤0.2.

In some specific embodiments of the present disclosure, in the Formula I, 0≤z<1, e.g., 0, 0.01, 0.05, 0.08, 0.1, 0.15, 0.2, 0.25, 0.3, 0.4, and any value within a range formed by any two of these values, and preferably, 0.01≤z≤0.3.

In some specific embodiments of the present disclosure, in the Formula I, 0≤m≤0.1, e.g., 0, 0.001, 0.002, 0.005, 0.01, 0.018, 0.05, 0.06, 0.08, 0.1, and any value within a range formed by any two of these values; 0≤n≤0.1, e.g., 0, 0.001, 0.002, 0.005, 0.01, 0.018, 0.05, 0.06, 0.08, 0.1, and any value within a range formed by any two of these values; preferably, 0.001≤m+n≤0.1, e.g., 0.001, 0.006, 0.01, 0.02, 0.05, 0.06, 0.08, 0.09, 0.1, and any value within a range formed by any two of these values.

In some specific embodiments of the present disclosure, in the Formula I, M and M' are each independently selected from at least one element of Al, Y, Ti, Zr, V, Nb, Ta, Cr, Mo, W, La, Ce, Er, Mg, Sr, Ba, P, or B; preferably, M and M' are different elements; more preferably, M is selected from at least one element of Al, Y, Ti, Zr, La, Sr, or B, and M' is selected from at least one element of Nb, Mo, W, or P.

In a specific embodiment of the present disclosure, the cathode material includes, but is not limited to, Li_{1.02}Ni_{0.9}Co_{0.05}Mn_{0.05}O₂, Li_{1.03}Ni_{0.83}Co_{0.11}Mn_{0.06}O₂, Li_{1.03}Ni_{0.6}Co_{0.1}Mn_{0.3}O₂, Li_{1.02}Ni_{0.9}Co_{0.05}Mn_{0.05}Al_{0.018}W_{0.002}O₂, Li_{1.03}Ni_{0.83}Co_{0.104}Mn_{0.06}Zr_{0.005}Nb_{0.001}O₂, and the like.

In some embodiments of the present disclosure, preferably, the negative thermal expansion material has a composition represented by Formula II: QₐQ'_{b}O_{c} (II), where a, b, and c are each independently selected from a natural number from 1 to 15, Q and Q' are each independently selected from at least one element of Zr, W, Hf, Al, Sc, In, Y, Mo, V, Sn, Ti, or P, and Q and Q' are different elements.

In some embodiments of the present disclosure, more preferably, the negative thermal expansion material is selected from at least one of tungstates, molybdates, vanadates, or pyrophosphates.

In a specific embodiment of the present disclosure, when the negative thermal expansion material is selected from the tungstates, the tungstates include, but are not limited to, ZrW₂O₈, HfW₂O₈, Al₂W₃O₁₂, Sc₂W₃O₁₂, In₂W₃O₁₂, Y₂W₃O₁₂, and the like.

In a specific embodiment of the present disclosure, when the negative thermal expansion material is selected from the molybdates, the molybdates include, but are not limited to, ZrMo₂O₈, HfMo₂O₈, and the like.

In a specific embodiment of the present disclosure, when the negative thermal expansion material is selected from the vanadates, the vanadates include, but are not limited to, ZrV₂O₇, HfV₂O₇, SnV₂O₇, TiV₂O₇, and the like.

In a specific embodiment of the present disclosure, when the negative thermal expansion material is selected from the pyrophosphates, the pyrophosphates include, but are not limited to, ZrP₂O₇, HfP₂O₇, SnP₂O₇, TiP₂O₂, and the like.

In some embodiments of the present disclosure, preferably, the cathode active material layer has a thickness ranging from 20 µm to 85 µm, e.g., 20 µm, 25 µm, 30 µm, 40 µm, 50 µm, 60 µm, 75 µm, 85 µm, and any value within a range formed by any two of these values, and preferably, from 25 µm to 60 µm.

In the present disclosure, for the cathode sheet, the thickness of the cathode active material layer is related to a characteristic and weight of the coated active material and a pressure for roller pressing. The active material refers to a mixture formed by the cathode material, the negative thermal expansion material, the conductive agent, and the binder. A high coating weight of the active material, low compaction performance of the cathode sheet, and a low pressure for the roller pressing during processing result in a thicker active material layer, which lengthens a charge transport path, adversely affecting charge transport, and causing increased impedance. Thus, a pronounced thermal effect occurs during charging and discharging, which negatively impacts cycling performance.

In the present disclosure, to achieve optimal electrical performance of the cathode sheet, when the negative thermal expansion material is present in the cathode sheet, matching the areal density of the cathode sheet is also necessary. When the areal density of the cathode sheet is low, a content of the cathode material is relatively low, heat generation is low, and processability of the cathode sheet is unsatisfactory. Thus, a content of the negative thermal expansion material in the cathode sheet needs to be reduced to match the thermal expansion of the cathode active material layer in the cathode sheet. Conversely, when the areal density of the cathode sheet is high, the content of the cathode material is high, leading to high heat generation. Therefore, during the processing, the crystal structure of the negative thermal expansion material in the cathode sheet needs to be preserved intact, and a greater amount of negative thermal expansion material is required to counteract the volume expansion of the sheet during charging and discharging.

In some embodiments of the present disclosure, preferably, based on a total weight of the cathode active material layer, a content of the cathode material ranges from 85.5 wt% to 94.52 wt%, and preferably, from 90 wt% to 94.5 wt%; and a content of the negative thermal expansion material ranges from 0.48 wt% to 9.5 wt%, and preferably, from 0.5 wt% to 5 wt%.

In some embodiments of the present disclosure, more preferably, based on a total weight of the cathode active material layer, a content of the conductive agent ranges from 2 wt% to 4 wt%, and preferably, from 2.5 wt% to 3.5 wt%; and a content of the binder ranges from 1 wt% to 3 wt%, and preferably, from 1.5 wt% to 2.5 wt%.

In the present disclosure, the conductive agent includes, but is not limited to, acetylene black, carbon fiber, carbon nanotubes, graphite, Ketjen black, and the like, and the binder includes, but is not limited to, PVDF and the like.

The cathode sheet provided by the present disclosure features a low internal resistance. Impedance testing performed on the cathode sheet shows that the cathode sheet has an initial discharge impedance value R(d), satisfying R(d)≤20 Ω, and preferably, R(d)≤18 Ω.

In a second aspect of the present disclosure, a method for preparing a cathode sheet is provided. The method includes: (1) mixing a cathode material, a negative thermal expansion material, a conductive agent, a binder, and a solvent to obtain a cathode slurry; and (2) coating the cathode slurry on a surface of a cathode current collector, and performing drying and roller pressing sequentially, to load a cathode active material layer on the surface of the cathode current collector for obtaining the cathode sheet. The cathode material is a lithium-containing layered compound. The negative thermal expansion material has a composition represented by Formula II: QₐQ'_{b}O_{c} (II), where a, b, and c are each independently selected from a natural number from 1 to 15, Q and Q' are each independently selected from at least one element of Zr, W, Hf, Al, Sc, In, Y, Mo, V, Sn, Ti, or P, and Q and Q' are different elements.

In some embodiments of the present disclosure, preferably, in the step (1), the cathode material, the negative thermal expansion material, the conductive agent, and the binder are mixed at a mass ratio of (85.5 to 94.52):(0.48 to 9.5):(2 to 4):(1 to 3), and preferably, (90 to 94.5):(0.5 to 5):(2.5 to 3.5):(1.5 to 2.5).

In some embodiments of the present disclosure, preferably, in the step (1), the cathode material has a composition represented by Formula I: Li_{1+α}NiₓCo_{y}Mn_{z}MₘM'ₙO₂ (I), where -0.5≤α≤0.4, 0<x<1, 0≤y<1, 0≤z<1, 0≤m≤0.1, 0≤n≤0.1, x+y+z+m+n=1, and M and M' are each independently selected from at least one element of Al, Y, Ti, Zr, V, Nb, Ta, Cr, Mo, W, La, Ce, Er, Mg, Sr, Ba, P, or B.

In some embodiments of the present disclosure, preferably, in the Formula I, 0≤α≤0.1, 0.6≤x≤0.9, 0.01≤y≤0.2, 0.01≤z≤0.3, m and n are not both zero, and 0.001≤m+n≤0.1.

In some embodiments of the present disclosure, preferably, in the Formula I, M and M' are different elements, and more preferably, in the Formula I, M is selected from at least one element of Al, Y, Ti, Zr, La, Sr, or B, and M' is selected from at least one element of Nb, Mo, W, or P.

In some embodiments of the present disclosure, preferably, in the step (1), the negative thermal expansion material has an average particle size D₅₀(F) satisfying: D₅₀(F)≤0.42D₅₀, where D₅₀ represents an average particle size of the cathode material, in the unit of µm. More preferably, the cathode material has an average particle size D₅₀ ranging from 1 µm to 20 µm, and preferably, from 1 µm to 10 µm. The average particle size D₅₀(F) of the negative thermal expansion material ranges from 0.1 µm to 10 µm, and preferably, from 0.1 µm to 3 µm.

In the present disclosure, in the step (1), the solvent is intended merely to enable uniform mixing of the cathode material, the negative thermal expansion material, the conductive agent, and the binder. The solvent includes, but is not limited to, NMP, methanol, ethanol, etc.

In some embodiments of the present disclosure, preferably, in the step (1), said mixing is performed under the conditions of: a temperature ranging from 15°C to 40°C, and preferably, from 20°C to 30°C; a duration ranging from 10 min to 120 min, and preferably, from 20 min to 60 min; and a rotational speed ranging from 500 rpm to 2,000 rpm, and preferably, from 800 rpm to 1,500 rpm.

In some embodiments of the present disclosure, preferably, a solid content of the cathode slurry ranges from 40 wt% to 60 wt%.

In the present disclosure, in the step (2), the coating is intended to uniformly coat the cathode slurry on the surface of the cathode current collector to form a cathode slurry coating layer, and the drying is intended to remove the solvent from the cathode slurry coating layer to form the cathode active material layer. Preferably, the drying is performed at a temperature ranging from 80°C to 150°C, and preferably, from 120°C to 150°C.

In some embodiments of the present disclosure, preferably, a pressure P for the roller pressing ranges from 5 T to 20 T. In the present disclosure, the roller pressing operation is generally carried out using a roller pressing machine. A roller pressing product is cut to obtain the cathode sheet.

With the method for preparing the cathode sheet provided by the present disclosure, the negative thermal expansion material is blended and incorporated into interstices between particles of the cathode material, which can balance the volume expansion of the material during charging and discharging, improving the cycling stability of the sheet. Specifically, by controlling the type, addition amount, and D₅₀ of the cathode material, the type, addition amount, and D₅₀(F) of the negative thermal expansion material, and the pressure P for the roller pressing, the characteristic value J of the cathode sheet is regulated. In this way, the cathode sheet possesses low volume expansion, high structural stability, and high-temperature stability.

In a third aspect of the present disclosure, a lithium-ion battery is provided. The lithium-ion battery includes the cathode sheet in the first aspect, or the cathode sheet prepared by the method in the second aspect.

In a specific embodiment of the present disclosure, the lithium-ion battery includes the cathode sheet provided by the present disclosure, an anode sheet, a separator disposed between the cathode sheet and the anode sheet, and an electrolyte.

The present disclosure will be described in detail below through examples.

Process parameters for preparing the cathode sheets in Examples and Comparative Examples, and physical property parameters of the prepared cathode sheets, are all listed in Table 1.

### Example 1

(1) The cathode material (Li_{1.02}Ni_{0.9}Co_{0.05}Mn_{0.05}O₂, D₅₀=3.5 µm), the negative thermal expansion material (ZrW₂O₈, D₅₀(F)=0.4 µm), the conductive agent (acetylene black), the binder (PVDF), and the solvent (NMP) were mixed (at a temperature of 25°C and a rotation speed of 1,000 rpm for 40 min) to obtain the cathode slurry with the solid content of 40 wt%.

The above cathode material, negative thermal expansion material, conductive agent, and binder were mixed at the mass ratio of 91.2:3.8:3:2.

(2) The above cathode slurry was coated on a surface of the aluminum foil serving as the cathode current collector to form the cathode slurry coating layer on the surface of the aluminum foil. After drying at 135°C, roller pressing was performed using the roller pressing machine (at a pressure of 15 T) to form the cathode active material layer on the surface of the aluminum foil, obtaining cathode sheet S1.

The XRD pattern of the above cathode sheet S1 is illustrated in FIG. 1. FIG. 1 reveals that, the above cathode material has the (003) characteristic peak at 2θ=18° and the (101) characteristic peak at 2θ=37°, and the main peak (F) of the above negative thermal expansion material is located between the (003) characteristic peak and the (101) characteristic peak of the cathode material.

### Example 2 to Example 6

Example 2 to Example 6 adopted the method of Example 1. Example 2 to Example 6 differed from Example 1 in that: in the step (1), the mass ratio of the above cathode material, negative thermal expansion material, conductive agent, and binder was adjusted based on data in Table 1, and all other conditions remained identical. In this way, cathode sheets S2 to S6 were obtained.

### Example 7 to Example 11

Example 7 to Example 11 adopted the method of Example 1. Example 7 to Example 11 differed from Example 1 in that: in the step (1), the type and D₅₀ of the above cathode material, the type and D₅₀(F) of the negative thermal expansion material, and the mass ratio of the above cathode material, negative thermal expansion material, conductive agent, and binder were adjusted based on the data in Table 1, and in the step (2), the pressure for the roller pressing was adjusted based on the data in Table 1; and all other conditions remained identical. In this way, cathode sheets S7 to S11 were obtained.

### Example 12

Example 12 adopted the method of Example 1. Example 12 differed from Example 1 in that: in the step (1), the type and D₅₀ of the above cathode material, and the mass ratio of the above cathode material, negative thermal expansion material, conductive agent, and binder were adjusted based on the data in Table 1, and in the step (2), the pressure for the roller pressing was adjusted based on the data in Table 1; and all other conditions remained identical. In this way, cathode sheet S12 was obtained.

### Example 13

Example 13 adopted the method of Example 12. Example 13 differed from Example 12 in that: in the step (1), D₅₀(F) of the above negative thermal expansion material was adjusted based on the data in Table 1, and all other conditions remained identical. In this way, cathode sheet S13 was obtained.

### Example 14

Example 14 adopted the method of Example 1. Example 14 differed from Example 1 in that: in the step (1), the type of the above cathode material was adjusted based on the data in Table 1, and all other conditions remained identical. In this way, cathode sheet S14 was obtained.

### Example 15

Example 15 adopted the method of Example 14. Example 15 differed from Example 14 in that: in the step (2), the pressure for the roller pressing was adjusted based on the data in Table 1, and all other conditions remained identical. In this way, cathode sheet S15 was obtained.

### Example 16

Example 16 adopted the method of Example 14. Example 16 differed from Example 14 in that: in the step (1), the type of the above negative thermal expansion material was adjusted based on the data in Table 1, and all other conditions remained identical. In this way, cathode sheet S16 was obtained.

### Example 17

Example 17 adopted the method of Example 7. Example 17 differed from Example 7 in that: the type of the above cathode material was adjusted based on the data in Table 1, and all other conditions remained identical. In this way, cathode sheet S17 was obtained.

### Comparative Example 1

Comparative Example adopted the method of Example 1. Comparative Example 1 differed from Example 1 in that: in the step (1), the mass ratio of the above cathode material, negative thermal expansion material, conductive agent, and binder was adjusted based on the data in Table 1, and all other conditions remained identical. In this way, cathode sheet DS1 was obtained.

### Comparative Example 2

Comparative Example 2 adopted the method of Example 1. Comparative Example 2 differed from Example 1 in that: in the step (1), D₅₀(F) of the above negative thermal expansion material was adjusted based on the data in Table 1, resulting in D₅₀(F)>0.42D₅₀, and all other conditions remained identical. In this way, cathode sheet DS2 was obtained.

### Comparative Example 3

Comparative Example 3 adopted the method of Example 1. Comparative Example 3 differed from Example 1 in that: in the step (2), the pressure for the roller pressing was replaced with 4 T based on the data in Table 1, and all other conditions remained identical. In this way, cathode sheet DS3 was obtained.

**[Table 1]**

| | Cathode material | | Negative thermal expansion material | | | Mass ratio* |
|---|---|---|---|---|---|---|
| | Type | D₅₀, µm | Type | D₅₀(F) , µm | D₅₀(F)≤0 .42D₅₀ | |
| Example 1 | Li_{1.02}Ni_{0.9}Co_{0.05}Mn_{0.05}O₂ | 3.5 | ZrW₂O₈ | 0.4 | √ | 91.2:3.8:3:2 |
| Example 2 | Li_{1.02}Ni_{0.9}Co_{0.05}Mn_{0.05}O₂ | 3.5 | ZrW₂O₈ | 0.4 | √ | 90.2:4.8:3:2 |
| Example 3 | Li_{1.02}Ni_{0.9}Co_{0.05}Mn_{0.05}O₂ | 3.5 | ZrW₂O₈ | 0.4 | √ | 92.1:2.9:3:2 |
| Example 4 | Li_{1.02}Ni_{0.9}Co_{0.05}Mn_{0.05}O₂ | 3.5 | ZrW₂O₈ | 0.4 | √ | 93.1:1.9:3:2 |
| Example 5 | Li_{1.02}Ni_{0.9}Co_{0.05}Mn_{0.05}O₂ | 3.5 | ZrW₂O₈ | 0.4 | √ | 94.1:0.9:3:2 |
| Example 6 | Li_{1.02}Ni_{0.9}Co_{0.05}Mn_{0.05}O₂ | 3.5 | ZrW₂O₈ | 0.4 | √ | 94.3:0.7:3:2 |
| Example 7 | Li_{1.03}Ni_{0.83}Co_{0.11}Mn_{0.06}O₂ | 10 | Al₂W₃O₁₂ | 0.4 | √ | 92.1:2.9:3:2 |
| Example 8 | Li_{1.03}Ni_{0.83}Co_{0.11}Mn_{0.06}O₂ | 10 | Al₂W₃O₁₂ | 1 | √ | 92.1:2.9:3:2 |
| Example 9 | Li_{1.03}Ni_{0.83}Co_{0.11}Mn_{0.06}O₂ | 10 | ZrV₂O₇ | 2 | √ | 92.1:2.9:3:2 |
| Example 10 | Li_{1.03}Ni_{0.83}Co_{0.11}Mn_{0.06}O₂ | 10 | ZrMo₂O₈ | 3 | √ | 92.1:2.9:3:2 |
| Example 11 | Li_{1.03}Ni_{0.83}Co_{0.11}Mn_{0.06}O₂ | 10 | TiP₂O₇ | 4 | √ | 87.5:7.5:3:2 |
| Example 12 | Li_{1.03}Ni_{0.6}Co_{0.1}Mn_{0.3}O₂ | 4 | ZrW₂O₈ | 0.4 | √ | 90.3:4.7:3:2 |
| Example 13 | Li_{1.03}Ni_{0.6}Co_{0.1}Mn_{0.3}O₂ | 4 | ZrW₂O₈ | 0.8 | √ | 90.3:4.7:3:2 |
| Example 14 | Li_{1.02}Ni_{0.9}Co_{0.05}Mn_{0.03}Al_{0.018}W _{0.002}O₂ | 3.5 | ZrW₂O₈ | 0.4 | √ | 91.2:3.8:3:2 |
| Example 15 | Li_{1.02}Ni_{0.9}Co_{0.05}Mn_{0.03}Al_{0.018}W _{0.002}O₂ | 3.5 | ZrW₂O₈ | 0.4 | √ | 91.2:3.8:3:2 |
| Example 16 | Li_{1.02}Ni_{0.9}Co_{0.05}Mn_{0.03}Al_{0.018}W _{0.002}O₂ | 3.5 | Fe[Co(CN) 6] | 0.4 | √ | 91.2:3.8:3:2 |
| Example 17 | Li_{1.03}Ni_{0.83}Co_{0.104}Mn_{0.06}Zr_{0.005} Nb_{0.001}O₂ | 10 | Al₂W₃O₁₂ | 0.4 | √ | 92.1:2.9:3:2 |
| Comparative Example 1 | Li_{1.02}Ni_{0.9}Co_{0.05}Mn_{0.05}O₂ | 3.5 | ZrW₂O₈ | 0.4 | √ | 94.9.0.1:3:2 |
| Comparative Example 2 | Li_{1.02}Ni_{0.9}Co_{0.05}Mn_{0.05}O₂ | 3.5 | ZrW₂O₈ | 2 | × | 91.2:3.8:3:2 |
| Comparative Example 3 | Li_{1.02}Ni_{0.9}Co_{0.05}Mn_{0.05}O₂ | 3.5 | ZrW₂O₈ | 0.4 | √ | 91.2:3.8:3:2 |

| | | | | | | |
|---|---|---|---|---|---|---|
| Note: √ indicates that D₅₀(F) of the negative thermal expansion material is ≤0.42D₅₀; otherwise, × is marked; *-mass ratio of the cathode material, the negative thermal expansion material, the conductive agent, and the binder. | | | | | | |

**[Continuation of Table 1]**

| | Mixing, °C×rpm×min | Drying, °C | Roller pressing, T | Cathode active material layer | | |
|---|---|---|---|---|---|---|
| | | | | Thickness, µm | Cathode material, wt% | Negative thermal expansion material, wt% |
| Example 1 | 25×1000×40 | 135 | 15 | 35 | 91.2 | 3.8 |
| Example 2 | 25×1000×40 | 135 | 15 | 35 | 90.2 | 4.8 |
| Example 3 | 25×1000×40 | 135 | 15 | 35 | 92.1 | 2.9 |
| Example 4 | 25×1000×40 | 135 | 15 | 35 | 93.1 | 1.9 |
| Example 5 | 25×1000×40 | 135 | 15 | 45 | 94.1 | 0.9 |
| Example 6 | 25×1000×40 | 135 | 15 | 35 | 94.3 | 0.7 |
| Example 7 | 25×1000×40 | 135 | 12 | 35 | 92.1 | 2.9 |
| Example 8 | 25×1000×40 | 135 | 10 | 40 | 92.1 | 2.9 |
| Example 9 | 25×1000×40 | 135 | 10 | 55 | 92.1 | 2.9 |
| Example 10 | 25×1000×40 | 135 | 12 | 45 | 92.1 | 2.9 |
| Example 11 | 25×1000×40 | 135 | 10 | 63 | 87.5 | 7.5 |
| Example 12 | 25×1000×40 | 135 | 18 | 33 | 90.3 | 4.7 |
| Example 13 | 25×1000×40 | 135 | 18 | 27 | 90.3 | 4.7 |
| Example 14 | 25×1000×40 | 135 | 15 | 35 | 91.2 | 3.8 |
| Example 15 | 25×1000×40 | 135 | 18 | 20 | 91.2 | 3.8 |
| Example 16 | 25×1000×40 | 135 | 15 | 39 | 91.2 | 3.8 |
| Example 17 | 25×1000×40 | 135 | 12 | 40 | 92.1 | 2.9 |
| Comparative Example 1 | 25×1000×40 | 135 | 15 | 35 | 94.9 | 0.1 |
| Comparative Example 2 | 25×1000×40 | 135 | 15 | 35 | 91.2 | 3.8 |
| Comparative Example 3 | 25×1000×40 | 135 | 4 | 88 | 91.2 | 3.8 |

**[Continuation of Table 1]**

| | Cathode sheet | | | |
|---|---|---|---|---|
| | Peak intensity ratio R(F) | Areal density ρ, mg/cm² | Characteristic value J | Initial discharge impedance R(d), Ω |
| Example 1 | 0.035 | 12 | 0.0029 | 16.8 |
| Example 2 | 0.048 | 12 | 0.0040 | 17.1 |
| Example 3 | 0.018 | 12 | 0.0015 | 16.5 |
| Example 4 | 0.024 | 16 | 0.0015 | 16.3 |
| Example 5 | 0.012 | 12 | 0.0010 | 17.3 |
| Example 6 | 0.0081 | 8 | 0.0010 | 17.3 |
| Example 7 | 0.028 | 12 | 0.0023 | 15.9 |
| Example 8 | 0.035 | 14 | 0.0025 | 16.2 |
| Example 9 | 0.03 | 16 | 0.0019 | 16.5 |
| Example 10 | 0.028 | 12 | 0.0023 | 16.3 |
| Example 11 | 0.082 | 20 | 0.0041 | 17.8 |
| Example 12 | 0.048 | 12 | 0.0040 | 17.6 |
| Example 13 | 0.036 | 10 | 0.0036 | 17.5 |
| Example 14 | 0.039 | 13 | 0.0030 | 16.9 |
| Example 15 | 0.008 | 8 | 0.0010 | 18.9 |
| Example 16 | 0.033 | 12 | 0.0028 | 18.6 |
| Example 17 | 0.038 | 14 | 0.0027 | 16.3 |
| Comparative Example 1 | 0.0048 | 12 | 0.0004 | 20.4 |
| Comparative Example 2 | 0.0049 | 7 | 0.0007 | 20.1 |
| Comparative Example 3 | 0.0018 | 30 | 0.0001 | 21.5 |

| | | | | |
|---|---|---|---|---|
| Note: peak intensity ratio R(F)=I(F)/I(003), i.e., the ratio of the peak intensity of the main peak (F) of the negative thermal expansion material to the peak intensity of the (003) characteristic peak of the cathode material; characteristic value J=R(F)/p. | | | | |

### Test Examples

The cathode sheets prepared in the above Examples and Comparative Examples were evaluated using 2025-type coin cells. An assembly process was specifically as follows.

Cell assembly: in an argon-filled glove box with both a water content and an oxygen content below 5 ppm, the above cathode sheet, a separator, an anode sheet, and an electrolyte were assembled into a 2025-type coin cell, which was then let stand for 6 hours. The anode sheet was a lithium metal sheet having a diameter of 16 mm and a thickness of 0.5 mm. The separator was a 25 µm-thick porous polyethylene membrane (Celgard 2325). The electrolyte was an equimolar mixture of ethylene carbonate (EC) and diethyl carbonate (DEC) containing 1 mol/L LiPF₆.

Electrochemical performance of the 2025-type coin cells assembled from the above Examples and Comparative Examples was tested using a Shenzhen Neware battery testing system. All test results are listed in Table 1 and Table 2.
(1) Initial impedance test method: the coin cell was subjected to capacity conditioning at 25°C and 0.1 C (when a nickel content in the cathode material of the cathode sheet was ≥80 mol%, a charge/discharge current density for 0.1 C during testing was 20 mA/g; when the nickel content in the cathode material of the cathode sheet was <80 mol%, the charge/discharge current density for 0.1 C during the testing was 18 mA/g). After the capacity conditioning, the coin cell rested for 10 minutes, was charged to 4.35 V at a constant current of 0.33 C and constant voltage, and then rested for another 10 minutes. Subsequently, the coin cell was discharged to 3.0 V at a constant current of 0.33 C, followed by another 10-minute rest. The cell after the capacity conditioning was recharged and re-discharged to 50% Depth Of Discharge (DOD), rested for 3 minutes, and then discharged at a constant current of 1 C for 18 seconds. A voltage and a current before and after the discharge process were recorded to calculate the impedance value.
(2) First-cycle charge/discharge specific capacity and first-cycle charge/discharge efficiency at 0.1 C test: at 25°C, the coin cell was subjected to charge/discharge testing at 0.1 C. When the nickel content in the cathode material of the cathode sheet was ≥80 mol%, the charge/discharge current density for 0.1 C during the testing was 20 mA/g, and a charge/discharge voltage was controlled to range from 3.0 V to 4.3 V. When the nickel content in the cathode material of the cathode sheet was <80 mol%, the charge/discharge current density for 0.1 C during the testing was 18 mA/g, and the charge/discharge voltage was controlled to range from 3.0 V to 4.4 V.
(3) Cycling performance test: with the charge/discharge voltage controlled to range from 3.0 V to 4.3 V, the coin cell was subjected to 2 charge-discharge cycles at 0.1 C and then 80 charge-discharge cycles at 1 C, all under a constant temperature of 45°C.
(4) Rate capability test: with the charge/discharge voltage controlled to range from 3.0 V to 4.3 V, at 25°C, the coin cell was subjected to 2 charge-discharge cycles at 0.1 C, followed by one cycle each at 0.2 C, 0.33 C, 0.5 C, 1 C, and 2 C. The rate capability of the multi-element cathode material was evaluated based on a ratio of a first-cycle discharge specific capacity at 0.1 C to a discharge specific capacity at 2 C. The first-cycle discharge specific capacity at 0.1 C corresponds to a 1-st cycle of the coin cell, and the specific discharge capacity at 2 C corresponds to a 7-th cycle of the coin cell.

**[Table 2]**

| | First-cycle discharge specific capacity at 0.1 C, mAh/g | First-cycle discharge efficiency, % | Discharge specific capacity at 2 C, mAh/g | 2.0 C/0.1 C,% | Cycle retention rate, % |
|---|---|---|---|---|---|
| Example 1 | 213.9 | 90.8 | 192.4 | 89.9 | 92.1 |
| Example 2 | 213.5 | 90.1 | 192.3 | 90.1 | 92.3 |
| Example 3 | 215.1 | 90.5 | 191.7 | 89.1 | 91.2 |
| Example 4 | 214.9 | 90.5 | 191.9 | 89.3 | 91.0 |
| Example 5 | 215.4 | 90.0 | 191.8 | 89.0 | 90.8 |
| Example 6 | 216.0 | 89.8 | 190.5 | 88.2 | 89.3 |
| Example 7 | 207.3 | 93.2 | 193.0 | 93.1 | 91.5 |
| Example 8 | 207.6 | 92.9 | 192.6 | 92.8 | 91.6 |
| Example 9 | 207.5 | 93.1 | 190.9 | 92.0 | 91.2 |
| Example 10 | 206.8 | 92.8 | 192.8 | 93.2 | 91.3 |
| Example 11 | 201.9 | 91.2 | 188.6 | 93.4 | 92.0 |
| Example 12 | 192.9 | 90.8 | 171.9 | 89.1 | 95.4 |
| Example 13 | 193.2 | 90.6 | 172.1 | 89.1 | 95.5 |
| Example 14 | 214.2 | 90.9 | 192.4 | 90.2 | 92.9 |
| Example 15 | 213.5 | 90.9 | 191.9 | 89.9 | 90.3 |
| Example 16 | 211.9 | 89.8 | 186.5 | 88.0 | 89.3 |
| Example 17 | 207.1 | 91.8 | 192.1 | 92.8 | 92.0 |
| Comparative Example 1 | 213.3 | 90.6 | 184.8 | 86.6 | 85.1 |
| Comparative Example 2 | 212.5 | 90.0 | 186.4 | 87.7 | 86.0 |
| Comparative Example 3 | 211.1 | 88.8 | 182.3 | 86.4 | 84.9 |

Data in Table 1 and Table 2 reveal that, compared with Comparative Example 1 to Comparative Example 3, Example 1 to Example 17 achieved cathode sheets whose peak intensity ratio R(F), areal density ρ, and characteristic value J fall within preferred ranges by controlling the type and D₅₀ of the cathode material, the type and D₅₀(F) of the negative thermal expansion material, the mass ratio between the cathode material and the negative thermal expansion material, and the pressure for the roller pressing. Thus, the layered active material in the cathode sheet can be ensured to exhibit excellent electrical performance, with satisfactory lithium-ion deintercalation ability and high rate capability for the capacity. In addition, adding the negative thermal expansion material to the sheet can counteract the volume expansion occurring during charging and discharging of the sheet, which reduces the volume expansion of the sheet during charging and discharging, avoiding an adverse effect of the volume expansion of the sheet on battery performance. Thus, the battery can be ensured to have satisfactory cycling performance. As a result, the battery has comprehensive performance characterized by high capacity, satisfactory rate capability, and long cycle life.

In Comparative Example 1, the amount of negative thermal expansion material used was relatively low, which resulted in a lower R(F) value of the cathode sheet, and a relatively high areal density ρ of the cathode sheet that led to a correspondingly lower characteristic value J. Thus, a proportion of the negative thermal expansion material capable of exerting a negative thermal expansion effect in the cathode sheet was too low to sufficiently counteract a volume change of the cathode material during charging and discharging. The relatively high areal density ρ led to increased internal resistance of the battery, reducing the discharge specific capacity, and affecting the rate capability and the cycle life. Moreover, during charging and discharging, cathode particles had relatively significant volume expansion and thermal effect, which deteriorates the cycling performance of the sheet.

In Comparative Example 2, D₅₀(F) of the negative thermal expansion material used was excessively large, causing a mismatch between the negative thermal expansion material and the cathode material. Consequently, the R(F) value of the sheet was also relatively low. Although the areal density ρ of the sheet was moderate, the corresponding characteristic value J of the sheet was relatively low. This indicated that although a predetermined amount of negative thermal expansion material was added during sheet preparation, the mismatch between the negative thermal expansion material and the cathode material prevented the negative thermal expansion material and the cathode material from functioning synergistically after the sheet was prepared. As a result, the capacity utilization of the sheet was reduced. Further, the negative thermal expansion material failed to counteract the thermal effect, impairing the rate capability and the cycling performance.

In Comparative Example 3, the sheet obtained after the processing had a relatively large thickness and a relatively high areal density, causing the value of J to deviate from an optimal range. Thus, the negative thermal expansion material in the active layer of the cathode material was unable to fully exert its counteracting effect during cycling, leading to inferior sheet performance.

Example 1 to Example 13 demonstrate electrical performance of sheets fabricated using a preferred design. Example 1 to Example 13 indicate that, for different combinations of the cathode material and the negative thermal expansion material, batteries assembled from sheets meeting characteristic value requirements of the sheets exhibited satisfactory rate capability and satisfactory cycling performance. In Example 11, the relatively high amount of the negative thermal expansion material added caused the characteristic value J of the sheet to deviate somewhat from the preferred range, resulting in a predetermined degree of reduction in the electrical performance.

Example 14, Example 15, and Example 17 employed preferred cathode materials in the cathode sheet. By utilizing ternary cathode materials modified with elements M and M', inherent stability of the cathode material was enhanced. Further, by controlling processing conditions, the resulting cathode sheets met the characteristic value requirements of the sheets, improving the cycling performance. In Example 16, a non-preferred negative thermal expansion material was used, which causes the characteristic value J of the sheet to deviate from the preferred range, reducing the rate capability and the cycling performance of the sheet.

While preferred implementations of the present disclosure have been described in detail above, the present disclosure is not limited in this regard. A variety of simple variants of the technical solutions of the present disclosure can be made within technical concepts of the present disclosure, including combinations of individual technical features in any other suitable manner. Such simple variants and combinations shall also be construed as disclosed in the present disclosure and fall within the protection scope of the present disclosure.

## Claims

1. A cathode sheet, comprising a cathode active material layer, wherein the cathode active material layer comprises a cathode material, a negative thermal expansion material, a conductive agent, and a binder, wherein the cathode sheet has a characteristic value J satisfying: 0.001≤J≤0.005, J=R(F)/p, where:
R(F) represents a ratio of a peak intensity of a main peak (F) of the negative thermal expansion material to a peak intensity of a (003) characteristic peak of the cathode material in an X-Ray Diffraction (XRD) pattern of the cathode sheet; and
ρ represents an areal density of the cathode sheet, in the unit of mg/cm².

2. The cathode sheet according to claim 1, wherein the characteristic value J of the cathode sheet satisfies: 0.00125≤J≤0.004.

3. The cathode sheet according to claim 1 or 2, wherein R(F)=I(F)/I(003), where:
I(F) represents the peak intensity of the main peak (F) of the negative thermal expansion material in the XRD pattern of the cathode sheet; and
I(003) represents the peak intensity of the (003) characteristic peak of the cathode material in the XRD pattern of the cathode sheet.

4. The cathode sheet according to claim 3, wherein 0.005≤R(F)≤0.1, and preferably, 0.02≤R(F)≤0.05.

5. The cathode sheet according to any one of claims 1 to 4, wherein the areal density of the cathode sheet satisfies: 8 mg/cm²≤ρ≤25 mg/cm², and preferably, 10 mg/cm²≤ρ≤16 mg/cm².

6. The cathode sheet according to any one of claims 1 to 5, wherein in the XRD pattern of the cathode sheet, the cathode material has the (003) characteristic peak at 2θ=18°±2° and a (101) characteristic peak at 2θ=37°±2°.

7. The cathode sheet according to any one of claims 1 to 6, wherein in the XRD pattern of the cathode sheet, the main peak (F) of the negative thermal expansion material is located between the (003) characteristic peak and a (101) characteristic peak of the cathode material.

8. The cathode sheet according to any one of claims 1 to 7, wherein the negative thermal expansion material has an average particle size D₅₀(F) satisfying: D₅₀(F)≤0.42D₅₀, where D₅₀ represents an average particle size of the cathode material, in the unit of µm.

9. The cathode sheet according to any one of claims 1 to 8, wherein the cathode material has an average particle size D₅₀ ranging from 1 µm to 20 µm, and preferably, ranging from 1 µm to 10 µm.

10. The cathode sheet according to any one of claims 1 to 9, wherein the negative thermal expansion material has an average particle size D₅₀(F) ranging from 0.1 µm to 10 µm, and preferably, ranging from 0.1 µm to 3 µm.

11. The cathode sheet according to any one of claims 1 to 10, wherein the cathode material is a lithium-containing layered compound.

12. The cathode sheet according to any one of claims 1 to 11, wherein the cathode material has a composition represented by Formula I: Li_{1+α}NiₓCo_{y}Mn_{z}MₘM'ₙO₂ (I), where -0.5≤α≤0.4, 0<x<1, 0≤y<1, 0≤z<1, 0≤m≤0.1, 0≤n≤0.1, x+y+z+m+n=1, and M and M' are each independently selected from at least one element of Al, Y, Ti, Zr, V, Nb, Ta, Cr, Mo, W, La, Ce, Er, Mg, Sr, Ba, P, or B,
preferably, in the Formula I, 0≤α≤0.1, 0.6≤x≤0.9, 0.01≤y≤0.2, 0.01≤z≤0.3, m and n are not both zero, and 0.001≤m+n≤0.1;
preferably, in the Formula I, M and M' are different elements; and
more preferably, in the Formula I, M is selected from at least one element of Al, Y, Ti, Zr, La, Sr, or B, and M' is selected from at least one element of Nb, Mo, W, or P.

13. The cathode sheet according to any one of claims 1 to 12, wherein the negative thermal expansion material has a composition represented by Formula II: QₐQ'_{b}O_{c} (II), where:
a, b, and c are each independently selected from a natural number from 1 to 15;
Q and Q' are each independently selected from at least one element of Zr, W, Hf, Al, Sc, In, Y, Mo, V, Sn, Ti, or P; and
Q and Q' are different elements.

14. The cathode sheet according to any one of claims 1 to 13, wherein the negative thermal expansion material is selected from at least one of tungstates, molybdates, vanadates, or pyrophosphates, and preferably, the negative thermal expansion material is selected from at least one of ZrW₂O₈, HfW₂O₈, Al₂W₃O₁₂, Sc₂W₃O₁₂, In₂W₃O₁₂, Y₂W₃O₁₂, ZrMo₂O₈, HfMo₂O₈, ZrV₂O₇, HfV₂O₇, SnV₂O₇, TiV₂O₇, ZrP₂O₇, HfP₂O₇, SnP₂O₇, or TiP₂O₇.

15. The cathode sheet according to any one of claims 1 to 14, wherein the cathode active material layer has a thickness ranging from 20 µm to 85 µm, and preferably, from 25 µm to 60 µm.

16. The cathode sheet according to any one of claims 1 to 15, wherein based on a total weight of the cathode active material layer:
a content of the cathode material ranges from 85.5 wt% to 94.52 wt%, and preferably, from 90 wt% to 94.5 wt%; and
a content of the negative thermal expansion material ranges from 0.48 wt% to 9.5 wt%, and preferably, from 0.5 wt% to 5 wt%.

17. The cathode sheet according to any one of claims 1 to 16, wherein based on a total weight of the cathode active material layer:
a content of the conductive agent ranges from 2 wt% to 4 wt%, and preferably, from 2.5 wt% to 3.5 wt%; and
a content of the binder ranges from 1 wt% to 3 wt%, and preferably, from 1.5 wt% to 2.5 wt%.

18. The cathode sheet according to any one of claims 1 to 17, wherein the cathode sheet has an initial discharge impedance value R(d), satisfying R(d)≤20 Ω, and preferably, R(d)≤18 Ω.

19. A method for preparing a cathode sheet, the method comprising:
(1) mixing a cathode material, a negative thermal expansion material, a conductive agent, a binder, and a solvent to obtain a cathode slurry; and
(2) coating the cathode slurry on a surface of a cathode current collector, and performing drying and roller pressing sequentially, to load a cathode active material layer on the surface of the cathode current collector for obtaining the cathode sheet, wherein:
the cathode material is a lithium-containing layered compound; and
the negative thermal expansion material has a composition represented by Formula II: QₐQ'_{b}O_{c} (II), where: a, b, and c are each independently selected from a natural number from 1 to 15; Q and Q' are each independently selected from at least one element of Zr, W, Hf, Al, Sc, In, Y, Mo, V, Sn, Ti, or P; and Q and Q' are different elements.

20. The preparation method according to claim 19, wherein in the step (1), the cathode material, the negative thermal expansion material, the conductive agent, and the binder are mixed at a mass ratio of (85.5 to 94.52):(0.48 to 9.5):(2 to 4):(1 to 3), and preferably, (90 to 94.5):(0.5 to 5):(2.5 to 3.5):(1.5 to 2.5).

21. The method according to claim 19 or 20, wherein the cathode material has a composition represented by Formula I: Li_{1+α}NiₓCo_{y}MnₓMₘM'ₙO₂ (I), where -0.5≤α≤0.4, 0<x<1, 0≤y<1, 0≤z<1, 0≤m≤0.1, 0≤n≤0.1, x+y+z+m+n=1, and M and M' are each independently selected from at least one element of Al, Y, Ti, Zr, V, Nb, Ta, Cr, Mo, W, La, Ce, Er, Mg, Sr, Ba, P, or B,
preferably, in the Formula I, 0≤α≤0.1, 0.6≤x≤0.9, 0.01≤y≤0.2, 0.01≤z≤0.3, m and n are not both zero, and 0.001≤m+n≤0.1,
preferably, in the Formula I, M and M' are different elements, and
more preferably, in the Formula I, M is selected from at least one element of Al, Y, Ti, Zr, La, Sr, or B, and M' is selected from at least one element of Nb, Mo, W, or P.

22. The method according to any one of claims 19 to 21, wherein the negative thermal expansion material has an average particle size D₅₀(F) satisfying: D₅₀(F)≤0.42D₅₀, where D₅₀ represents an average particle size of the cathode material, in the unit of µm.

23. The method according to any one of claims 19 to 22, wherein the cathode material has an average particle size D₅₀ ranging from 1 µm to 20 µm, and preferably, from 1 µm to 10 µm.

24. The method according to any one of claims 19 to 23, wherein the negative thermal expansion material has an average particle size D₅₀(F) ranging from 0.1 µm to 10 µm, and preferably, from 0.1 µm to 3 µm.

25. The method according to any one of claims 19 to 24, wherein said mixing is performed under the conditions of:
a temperature ranging from 15 °C to 40 °C, and preferably, from 20 °C to 30 °C;
a duration ranging from 10 min to 120 min, and preferably, from 20 min to 60 min; and
a rotational speed ranging from 500 rpm to 2,000 rpm, and preferably, from 800 rpm to 1,500 rpm.

26. The method according to any one of claims 19 to 25, wherein in the step (2), said drying is performed at a temperature ranging from 80 °C to 150 °C, and preferably, from 120 °C to 150 °C.

27. The method according to any one of claims 19 to 26, wherein the roller pressing is performed under a pressure P satisfying 5T<P<20T.

28. The method according to any one of claims 19 to 27, wherein in step (1), the cathode material, the negative thermal expansion material, the conductive agent, and the binder are mixed at a mass ratio of (90 to 94.5):(0.5 to 5):(2.5 to 3.5):(1.5 to 2.5).

29. A lithium-ion battery, comprising:
the cathode sheet according to any one of claims 1 to 18; or
the cathode sheet prepared by the method according to any one of claims 19 to 28.
